# EUROPEAN PATENT APPLICATION

(11) **EP 3 821 710 A1**
(43) Date of publication of application: **19.05.2021**
(21) Application number: 20205310.4
(22) Date of filing: 02.11.2020
(51) Int. Cl.: A22B 7/00

(54) **HANDLING SUPPORT**

(30) Priority: 12.11.2019 NL 2024223
(71) Applicant: Serendipity B.V., 7006 RW Doetinchem (NL)
(72) Inventor: Leuver, Frank Christiaan, 7006 RW Doetinchem (NL)
(74) Representative: van Essen, Peter Augustinus

(57) **Abstract**

The invention pertains to a handling support (1) for conveying material parts, in particular meat portions, and comprising repeating sections (S, S') each comprising two skewers (22) in substantially one section plane, said repeating sections having a common longitudinal axis (L) and opposite sides with respect to said longitudinal axis (L) with one skewer at one side and the other skewer at said opposite side, wherein said handling support (1) is made as one part from plastic, wherein said skewers (22) comprise a skewer end (25) extending away from said longitudinal axis (L) for allowing skewing said material parts onto said handling support (1), a skewer base and a skewer tip sharp enough for allowing meat portions to be punctured, wherein said sections comprise at least one from:
- a first section type with a first section length of 10-12 cm and said skewers having a skewer length of 3.0-4.5 cm and a skewer width of 4.0-5.0 cm;
- a second section type with a second section length of 15-18 cm and said skewers having a skewer length of 4.5-5.5 cm and a skewer width of 3.0-4.0 cm;
- a third section type with a third section length of 19-25 cm, and wherein said skewers having a skewer length of 4.0-6.0 cm and a skewer width of 2.0-3.0 cm.

## Description

### Field of the invention

The present invention relates to a handling support, notably for a system for conveying objects continuously, from one processing station to another, used in various automated production lines comprising a continuous overhead conveyor provided with load attachment hooks, particularly in the food industry where this support is appropriate for conveying meat cuts.

### Background of the invention

Supports are known for such applications for suspending pieces of meat, as described in the Dutch Patent No. 191771, published on 14-1-1996, which discloses a support consisting of a straight stem of generally flat shape and decreasing cross section, including at its widest end an orifice for attachment to an automatic conveying member and on its lateral faces a plurality of slots intended to receive links for attaching objects such as cords used for attaching cuts of meat.

EP2443931 discloses a handling support, notably for a continuously suspended object conveying system, consisting of two parallel uprights linked at one end to a reinforced hoop for attaching to an automatic conveying member, a plurality of spacers ensuring that the uprights are maintained in the parallel position, which uprights include, on an opposite face, a plurality of members for attaching the objects to be conveyed, these uprights being in the form of a flat central stem complemented at the edge with laterally positioned perpendicular ribs, the top part of the support which supports all the weights and the loads that are attached thereto being reinforced by a widening of the uprights linked by hoops of equivalent width, the whole being provided with double edge ribs complemented with transversal ribs.

DE2517944 according to its abstract describes "The columns, intended to hang from a common rail (2), are composed of identical sections (3), each carrying two or more symmetrically-placed hooks (5) and having a square coupling knob at the lower end and the matching socket at the upper end. A rounded hook (1) with the same square coupling holds the column on the fixed rail. A column composed of a single section is strong enough to hold two sides of meat; longer columns serve for joints, strings of sausages etc. When coupled, the column presents smooth outer surfaces for easy cleaning; to which end also, all the corners and edges are amply rounded." The hooks are all in one plane, and the columns are composed of identical sections.

FR2580902 according to its abstract describes "This hooking device, particularly for hanging quarters of meat, comprises, moreover, a hanging device 3, provided with means 4 for rolling on rails of a handling installation, from which are hung hooks 12, 18, 21 for hooking quarters of meat. The hooks 12, 18, 21 are articulated to one another, end-to-end, so as to form a flexible hanging chain, the hooks 12 comprising at their lower part a ring 16 equipped with an orifice 17 receiving an articulation pin 16 equipped with an orifice 17 receiving an articulation pin 20 integral with a clevis 19 of a following hook 18 in the chain." It shows and describes only metal hooking devices. US569142A of 1896 in its introduction describes "My invention relates to improvements in meat hooks or hangers, and more particularly to devices adapted to be attached to hams, bacon, or other bodies of meat;, either uncovered or in sacks, by means of which said bodies or masses may be conveniently suspended or hung up. The device consists of a single piece, preferably of metal, as spring-wire, formed into a frame having two main parts connected by a spring-bend, with the free ends of the main parts bent or doubled to form hooks, having dull rounded ends and inwardly-turned pointed terminals or needles."

DE4429167A1 according to its abstract describes "A piece of meat (10 - 16), which is conveyed on a conveyor (5), is to be suspended on a hook (8) of a transport means (1), the transport means (1) being positioned at the downstream end of the conveyor (5), positioned above the level of the hook (8), the piece of meat (16) being conveyed partially beyond the end of the conveyor (5) to a position above the hook (8) and the piece of meat (6, 7) then being punched or pressed down onto the hook, by a pressing tool (6, 7)." The metal hook has sets of hooks along its length, with each set having four hooks at right angles with respect to one another.

Finally, EP3064068 of applicant describes "a handling support for conveying material parts, in particular meat portions, and comprising an upright linked at one end to an eye for attaching to an automatic conveying member, the upright including a plurality of attachment members for attaching the material parts to be conveyed, wherein said handling support is made as one part from plastic and wherein said attachment members comprise skewers which comprise a pointed end at a distance from said upright for allowing skewing said material parts onto said handling support." The plastic support art with skewers that solves many issues with respect to the further prior can be improved.

### Summary of the invention

It is an aspect of the invention to provide a handling support that is relatively easy and cheap to produce. Furthermore or alternatively, it is an aspect of the invention to provide a handling support that allows improved handling efficiency. Furthermore or alternatively, it is an aspect of the invention to provide a handling support that allows handling of a relatively heavy load.

The present invention relates to handling support according to claim 1.

In particular, the handling support is designed for handling meat portions or meat cuts. Often, these meat portions are more than several kilograms each. In particular, these meat portions can weigh more than 5 kg each. The handling support can handle several of these meat portions. In particular, the handling support can hold more than four meat portions.

The meat portions can be pressed onto ends of the skewers such that the skewers are inserted into the material to be hung up. Thus, no special provisions need to be made for suspending the material. In an embodiment, the meat portions may comprises small incisions that allow the meat portions to be easily attached onto a skewer. When the meat portions comprise relatively tender meat, they can also be attached to such a skewer easily. When meat portions as less tender, like for instance dried and smoked ham, the skewers have pointed ends that allows meat portions to be skewed onto the skewers. Meat portions were often provided with loops of material, and these loops are hung onto hooks on supports for suspending the meat portions. The meat portions need to be provided with these loops in a separate step. Furthermore the loops can introduce contaminations. The loops can be a source of foreign bodies in meat. At a certain stage, the loops are discarded and thus form part of waste.

In an embodiment, the skewers extend in a direction of said eye, in particular slanted with respect to said longitudinal axis. In order to put less stress onto the skewers in particular they are slanted as little as possible. In fact, in examples provided, the skewers extend almost parallel to the common longitudinal axis of the handling support.

In an embodiment, the skewers comprise a pointed end and a support end, said support end attached to said upright at a distance from said upright, in particular via a rounded part. This allows direction of a large part of the force exerted by the material to be in the longitudinal direction of the support.

In an embodiment, the skewers extend functionally parallel to a longitudinal direction of said handling support, in particular functionally parallel to said upright. This further allows direction or deflection of a large part of the force exerted by the material to be in the longitudinal direction of the support.

In an embodiment, the handling support comprises said attachment members staggered. Thus, the weight of the material can be spread more evenly along the length of the support.

The repeating sections may share an upright on said longitudinal axis. The upright may be a solid stem having for instance a round or rectangular cross section. Alternatively, an upright may be profile section, for instance having an H-shaped cross section.

In an embodiment, the handling support comprises at least two functionally parallel uprights, said uprights interconnected. In an embodiment thereof, each upright comprises attachment members. In this way, higher strength using less material for the support is possible.

In an embodiment, said uprights define a plane, and wherein said attachment members extend substantially in said plane. Thus, a support can be produced using injection moulding using a more simple, two-part mould.

In an embodiment, said upright is elongated having a longitudinal direction and comprising said eye at one end and said attachment members along said length, in particular said attachment members and said upright defining functionally one plane. In an embodiment, said attachment members are provided at both sides of said longitudinal direction, in particular said attachment members are provided in a staggered manner. Thus, for instance, when following the support from the eye downward, each time one attachment member is provided extending one way, then an next attachment member is provided extending the opposite way, etcetera and so on. In an embodiment, the handling support comprises two parallel uprights linked at one end to a reinforced hoop for attaching to an automatic conveying member. A plurality of spacers may ensure that the two uprights are maintained in the parallel position. These uprights including, on an opposite face, a plurality of members for attaching the objects to be conveyed.

This structure with two parallel uprights assembled as ladder uprights makes it possible, while retaining sufficient rigidity, to obtain a handling support that is considerably lighter than the necessarily more bulky supports of the prior art for conveying equivalent loads, as previously described.

In an embodiment, the uprights are in the form of a flat central stem complemented at the edge with laterally positioned perpendicular ribs.

In an embodiment, the top part of the support which supports all the weights and the loads that are attached thereto is reinforced by a widening of the uprights, this widened part being linked by hoops of equivalent width, the whole being provided with double edge ribs complemented with transversal ribs.

In an embodiment, the flat central stem of the uprights has a reinforced thickness in its top part that connects to the attachment head as far as a level from which a more reduced thickness is provided for the rest of the length of the upright according to the load weights that can be attached in this region, the maximum reinforcement by H profile ribs being provided in the top part as far as a given point to be extended as far as the bottom end of the support by a T profile with a single reinforcing rib.

In an embodiment, load attachment tabs are positioned on the external faces of the uprights of the ladder and intended to receive load attachment links. In an embodiment thereof, a safety retaining spur is positioned at the entry to the region of attachment of the load attachment tabs.

Further embodiments are presented in the depending claims an in the description of embodiments below.

The handling support can be made from a polymer material, or plastic, as indicated. In an embodiment, the handling support is injection moulded from a thermoplastic material. In an embodiment, polypropylene is selected, as this is food safe and has a high strength. In an embodiment, for instance DuPure® TE 76 can be used, or a comparable material. DuPure® TE 76 is a socalled "Polypropylene Heterophasic Copolymer". It is produced with a phthalate-free catalyst. It has the following mechanical properties:
Tensile Modulus (1 mm/min) ISO 527-2 1100 MPa
Tensile Stress at Yield (50 mm/min) ISO 527-2 23 MPa
Tensile Strain at Yield (50 mm/min) ISO 527-2 8 %
Tensile Strain at Break (50 mm/min) ISO 527-2 > 50 %
Tensile Creep Modulus 1000 h, elongation ≤ 0.5 % ISO 899-1 220 MPa
Shear Modulus ISO 6721-2 530 MPa

In particular, there is provided a handling support from polymer material comprising an extending stem element comprising an eye at one end and a series of skewers extending from said stem for allowing skewing material parts, in particular meat parts, onto said skewers and thus onto handling support.

The term "substantially" herein, like in "substantially consists", will be understood by and clear to a person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

The term "functionally" will be understood by, and be clear to, a person skilled in the art. The term "substantially" as well as "functionally" may also include embodiments with "entirely", "completely", "all", etc. Hence, in embodiments the adjective functionally may also be removed. The term "functionally" is intended to cover deviations in a feature to which it refers which are such that in the functional use of the feature in combination with other features it relates to in the invention, the combination of features is able to operate.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

An exemplary embodiment of a handling support will be described hereinbelow, with reference to the appended drawings, in which the first drawings show earlier supports from the application in particular showing some alternative embodiments of the skewers:
- Figure 1 represents a perspective overview an earlier support of applicant,
- Figure 2 shows an enlarged partial view of figure 1 showing attachment members,
- Figure 3 shows alternative attachment members,
- Figure 4 shows a perspective view of another earlier embodiment of a support with a single upright,
- Figure 4a shows an attachment member of figure 4 in cross section;
- Figure 5 shows a perspective view of yet another embodiment of an earlier support with a single upright,
- Figure 5a shows an attachment member of figure 5 in cross section;
- Figure 6 shows a cross section of an alternative attachment member;
- Figure 7 shows a cross section of yet another alternative attachment member;
- Figures 8-12 show an embodiment and details of the current handling support, and
- Figures 13-19C show embodiments of an other embodiment of the handling support.

### Description of embodiments

As mentioned in the brief description, first some of the earlier embodiments of a handling support are (re)presented first. Some aspects of these designs may still be relevant. It was found that although this design might be applicable for some situations, some further improvements were possible.

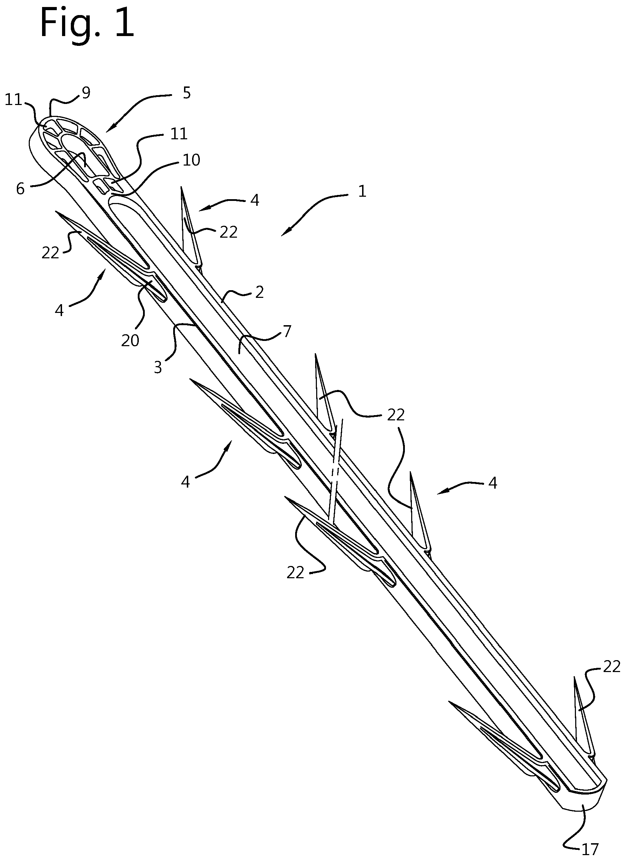

Figure 1 is a perspective view of such an earlier handling support 1. In this embodiment, it has two parallel rectilinear uprights 2 and 3 that are interlinked. That can be achieved using a series of spacers or ribs. Here, the uprights are interlinked by a continuous part 7. On the external faces of the uprights 2 and 3, a plurality of attachment members 4 for receiving meat portions that are skewed onto the attachment members 4. Thus, the support 1 is used for instance for suspending cuts of meat in refrigerating conveyor systems. The attachment member 4 has a skewer or pin 22. A skewer 22 may be cone-shaped. The attachment member 4 further comprises a reinforcement rib 20 extending in longitudinal direction. The reinforcement rib 20 strengthens the skewer 22. The skewer 22 of this embodiment extends in a slanted direction. In an embodiment, the skewer has a length of 6-8 cm.

In this embodiment, the uprights 2 and 3 are here each in the form of a solid, flat stem. Alternatively, a flat central stem complemented at the edge with laterally positioned perpendicular ribs, either along a single edge, forming a T section, or along the two edges, forming an H section. These T or H profiles of the uprights 2 and 3 make it possible to obtain maximum rigidity for a minimum weight of the supports 1, while providing them with sufficient rigidity for their load support function.

The structure of the support 1 can be adapted to the stresses of the loads to be supported. The top part, which supports all the weights of the support 1 and the loads that are attached thereto, can be reinforced by a widening of the uprights 2 and 3. The top parts of the uprights 2, 3 comprises an attachment head 5 that is here provided with an eye 6. The uprights 2, 3 can be linked by a single hoop. In the embodiment of figure 1, the uprights 2, 3 at the top part are linked by hoops 9 and 10, here of equivalent width. Here, both hoops 9, 10 are provided with double edge ribs complemented with transversal ribs 11, forming a reinforced region of the attachment head as represented in Figure 1.

The uprights 2 and 3 will have a structure suited to the loads to be supported. Their flat central stem can have a reinforced thickness in the top part that connects to the attachment head 5 where the weights are concentrated. From about halfway, the uprights 2, 3 can have a reduced thickness. This can provide for the rest of the length of the upright according to the more reduced load weights that can be attached in this region. Similarly, the maximum reinforcement by H-profile ribs may be provided in the top part as far as halfway, to be extended as far as the bottom end of the support by a T profile with a single reinforcing rib, corresponding to the lesser loads supported by this region.

The top part of the support 1 in this embodiment comprising the double attachment hoop 9 and 10, which supports the totality of the load, support and attached objects. It may be reinforced by a widening of the uprights 2 and 3 and the fact that they are framed by the ribs 11 and the hoops 9 and 10. This reinforced top part can be extended by a top part of the uprights 2 and 3 of reinforced thickness edged with perpendicular ribs 11 forming an H section with maximum resistance to the attachment weights as far as a point halfway after which only one of the ribs is maintained, forming a T section that is sufficient to provide a support for lesser loads while retaining a sufficient rigidity in the bottom part of the support 1.

At their lower ends, the uprights 2,3 are in this embodiment connected via a connecting loop 17.

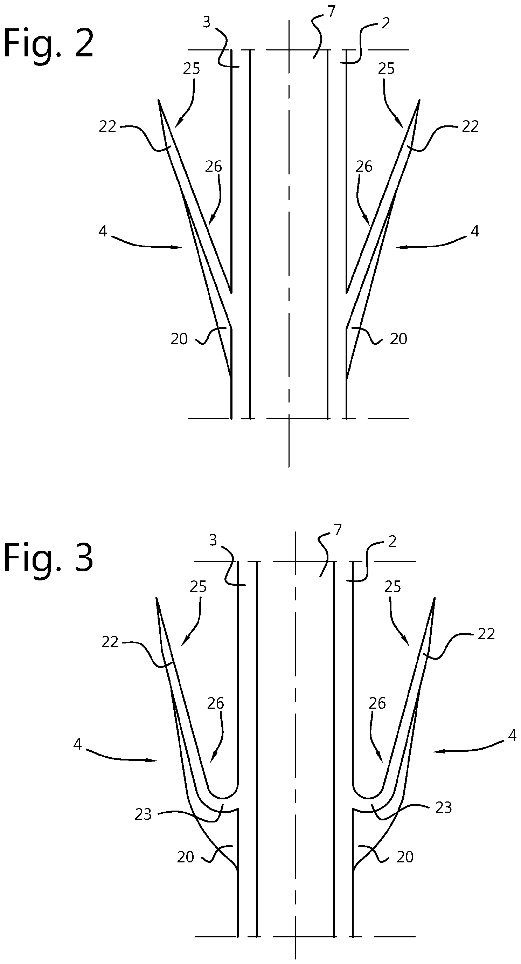

Figures 2 and 3 shows a partial view, in elevation, of some alternative embodiments of the attachment members 4. The uprights 2, 3 can in an other embodiment (not shown) be reinforced with ribs interconnecting the uprights 2, 3, for instance at positions of attachment members 4. With attachment members 4 positioned at opposite uprights 2, 3 at the same height, this providing each time two opposite attachment members 4, this may provide additional strengthening. Alternatively, the attachment members 4 are each time provided in a staggered manner, thus avoiding a heavy load at one position, but spreading the load more equally over the length of the support 1. It also provides a better distribution of volume. At the positions of attachment members 4, bridging ribs may be provided between uprights 2, 3.

In the embodiment of figures 2 and 3, the skewers 22 are slanted into an upward direction, pointing towards the attachment head 5.

In the embodiment of figure 3, the skewers 22 are attached to the uprights 2, 3 via a rounded part 23. In the embodiment shown, the rounded part 23 is such that the skewers are still a little slanted away or outward with respect to a longitudinal line of the support 1. The skewers 22 point upward in a direction towards the attachment head 5.

In an embodiment that will be shown in the current handling support 1 below, the rounded part is such that the skewers 22 are functionally parallel to the longitudinal direction of the support 1. In an embodiment, the rounded part is dimensioned to provide the skewer 22 at a distance of between 5 mm and 30 mm of its upright 2, 3. In an embodiment, the skewer 22 has a distance of between 5 and 10 mm from its upright 2,3.

In an other embodiment that is not depicted, the skewer 22 is attached to its upright 2, 3 via a coupling end holding the skewer 22 functionally parallel to the longitudinal direction, and with its support end 26 at a distance from its upright 2, 3. In an embodiment, the distance is between 5 and 30 mm, in particular between 5 and 10 mm. The functionally parallel skewer 22 has a reduced load component in a direction perpendicular to the longitudinal direction of the support 1.

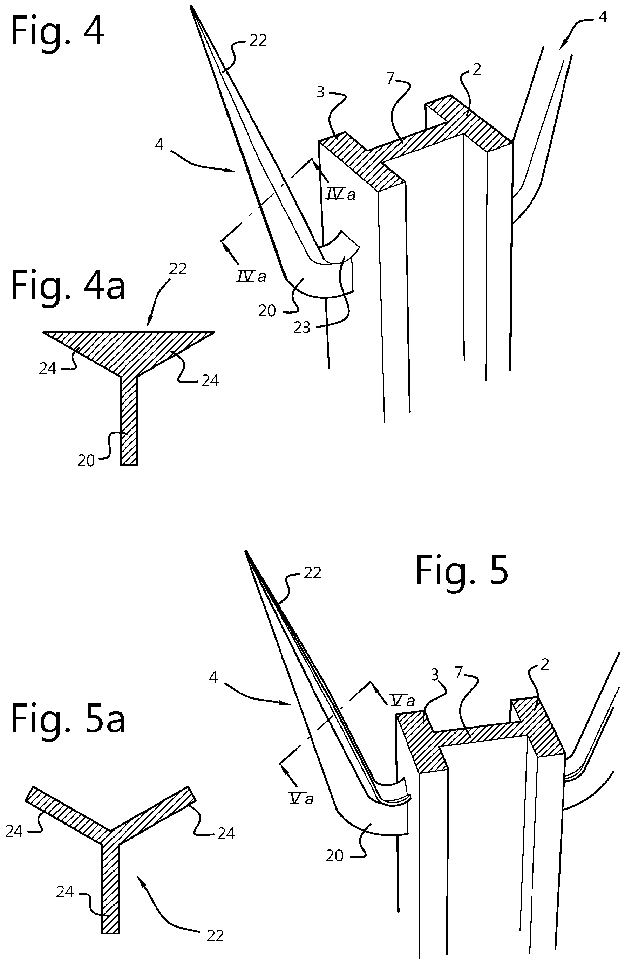

In figure 4, yet another embodiment of the attachment members 4 is shown. In this embodiment, skewer 22 again has a little slanted direction. The skewer 22 has skewer ribs 24 that have cutting ends or edges (see cross section in figure 4a) for providing easier skewing.

In figure 5, the skewer 22 has skewer ribs 24 that are positioned at a mutual angle less than 180 degrees, providing additional strength in a direction away from the longitudinal direction of the support 1. The skewer ribs 24 here have blunt ends or edges, but may be combined with the embodiment of figures 4 and 4a and also have similar sharp ends or edges.

The skewers 22 may also be provided with barbs (not shown) to prevent material from easily letting loose from the skewers 22. The barbs of alternative friction-increasing elements may be provided on or combined with the skewer ribs 24.

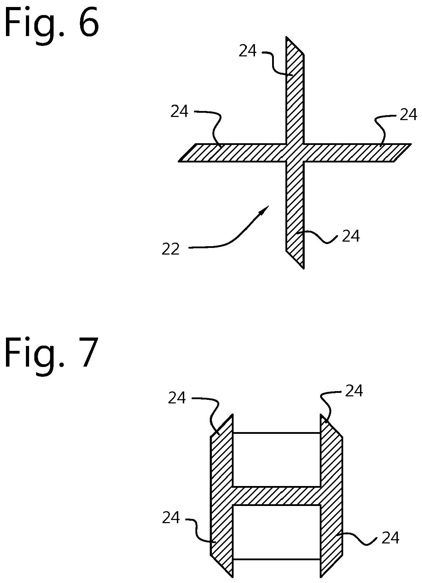

In figures 6 and 7, alternative cross sections of a skewer 22 is provided, at the position indicated in figure 5.

In figure 6, the skewer 22 has a cross-shaped cross section and its skewer ribs 24 have sharp or cutting edges. When oriented as shown, i.e., with skewer ribs 24 in plane with the uprights and skewer ribs perpendicular to the plane formed by the uprights, the embodiment is producible via a two-part injection mould.

In figure 7, a skewer 22 is shown that has an increased bending strength due to its H-shaped cross section. It can have additional reinforcement ribs inside. The orientation is such that the legs of the H are in planes that are functionally perpendicular to a plane defined by the two uprights 2, 3 (i.e., normal to the paper in figures 2 and 3). In this way, the skewers 22 can be produced in a simple 2-part mould. The support is dischargable from an injection mould.

In an embodiment, a height of perpendicular ribs can be reduced from 1.2-1.4 mm to 1.0-1.2 mm. In fact, in this embodiment, the height of the inner perpendicular rib when starting from the hoop, first is equal or essentially equal to the height of the outer rib. Then, beyond the second pair of attachment members 4, the height of the inner ribs is reduced to 7-9 mm. After the third part of attachment members 4, the uprights continue in a T-shape.

In the embodiment, the size of the hoops 9, 10 can be reduced. The attachment members 4 may have extended perpendicular ribs, and the other end of the support can be modified.

The attachment members 4 can be located at the position of spacers or reinforcement ribs. Thus, extended ribs or reinforcement ribs contribute to the rigidity of the uprights 1, 2 and to their connection.

Tests showed that the hoops can extend up to the first attachment members 4. In that way, these first attachment members 4 can continue into hoop 10 which was found to provided additional strength. Thus, the uprights 2, 3 continue up to the first attachment members 4, and from there are connected via an outer hoop 9. The outer hoop 9 has two perpendicular ribs that are interconnected by the transversal ribs 11. In order to provide additional strength and form a eye, the lower hoop 10 is positioned as mentioned at the location of the first attachment members 4 and its upper perpendicular rib continues into the attachment members 4. The lower hoop 10 also has two almost parallel perpendicular ribs and (one) transverse rib 11.

At its opposite end, the uprights 2, 3 continue as or into an end-arch 17, and the flat central part 7 connection the uprights 2, 3 continues like the earlier-presented design. This was found to further increase rigidity and strength of the support 1.

The duly described structural characteristics of load handling supports 1 according to the invention show the possibilities of adapting such supports 1 to a wide variety of loads, by adapting the choice of the constituent material and the dimensions of the various elements. The handling support 1 is made from plastic. In a broad sense, this is a material than can be shaped using hot forming. In particular, plastic relates to a polymer material. This may include reinforced plastic, for instance fiber-reinforced plastic.

The handling support 1 can be flexible, as long as it holds the weight of the material parts. The handling support 1 may be able to twist about its common longitudinal axis L.

In an embodiment, the plastic material is injection mouldable. This material will advantageously be a plastic material that can be moulded by injection into a mould with a single flat joint plane, all the upright and rib shapes being able to be stripped directly from the moulds, resulting in a lower manufacturing cost. The material in an embodiment is a food-grade polymer. The material can for instance be nylon (polyamide), PE (polyethene), PC (polycarbonate) or PP (polypropene). The design allows the support to carry loads of meat of between 100 and 200 kg. In particular, it allows it to safely carry between 150 and 180 kg of meat, for instance hams. The support can be between 1.0 and 1.5 m long. It was found that in the embodiment of figures 1-3 can carry up to 150 kg of meat and have a weight of between 130 and 100 gr. In particular, embodiments can carry up to 170 kg of meat. It can have an even more reduced weight, resulting in a support of between 80 and 100 gr.

The embodiments of the handling support 1 for the following drawings requires a more complicated injection mould for production, for instance, when compared with the earlier designs of figure 1-5. It was found possible to provide a design that is relatively light, and yet allows carrying more and even heavier loads that the earlier designs. This is because in this design, meat parts or portions will not or to a lesser extend hinder one another.

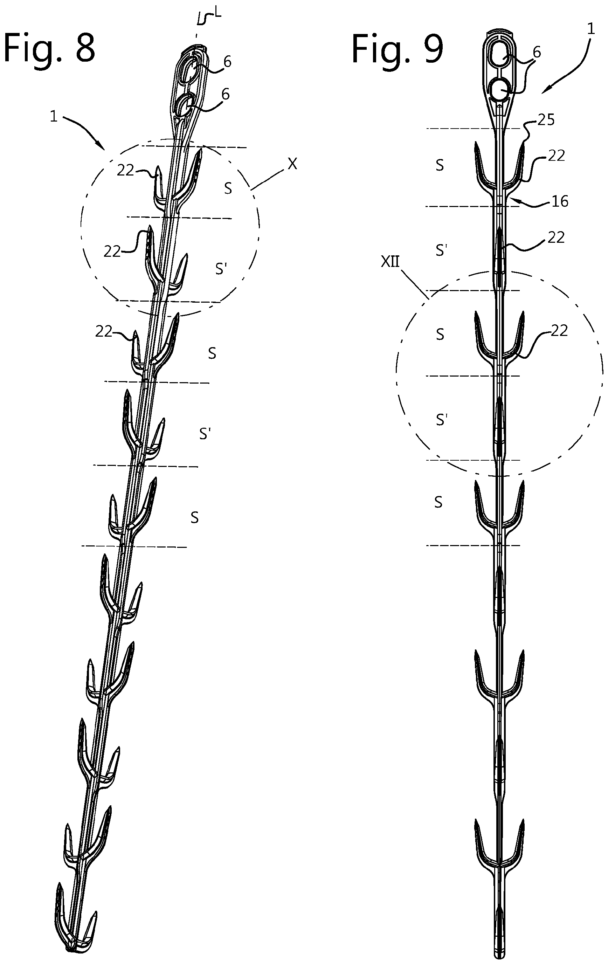

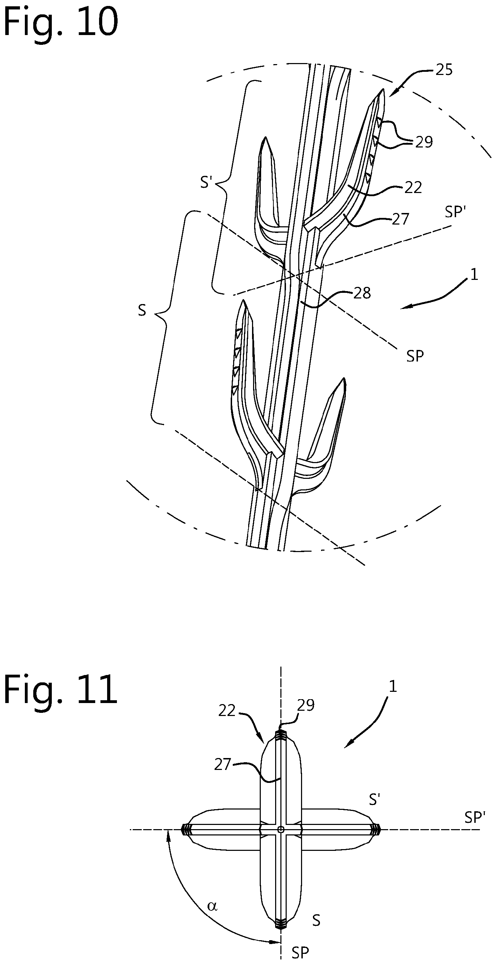

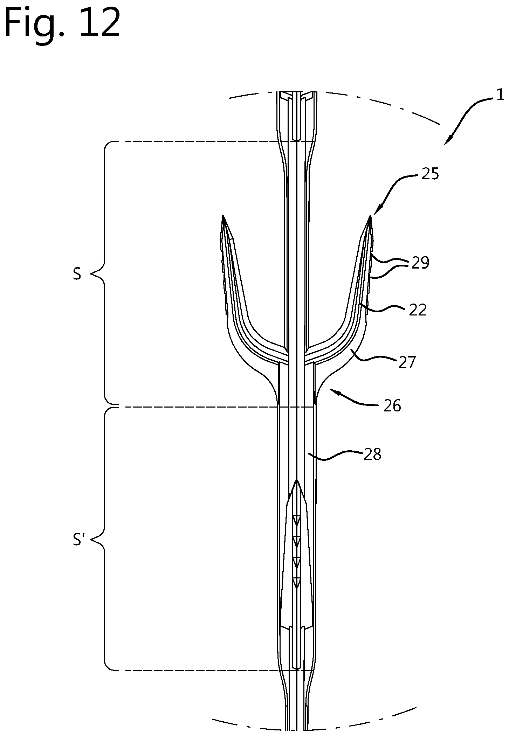

Figure 8 shows the current handling support 1 or hanger in full in perspective view and in figure 9 in full in side view. In figures 10-12 details are shown, where figures 10 and 12 show two full, subsequent repeating sections S, S'. Here, repeating sections S are all oriented in one way, and the repeating sections indicates with S' are all rotated along the common longitudinal axis L. Figure 11 is a view from below.

In this current example, the repeating sections S' are rotated 90 degrees with respect to repeating sections S. Subsequent section planes SP, SP' are thus at an angle α of 90 degrees as indicated in figure 11. The rotations or angle α may vary a little. In an embodiment as depicted in figures 8-12, all repeating sections S are mutually aligned and all repeating sections S' are mutually aligned. Alternative configurations are possible. For instance, one repeating section S' may be rotated 85 degrees and a subsequent repeating section S' may be rotated 95 degrees. Also, subsequent repeating sections S may be rotated a little with respect to one another. This will, however, make production for instance using an injection mould more complex.

In the currently depicted example, each repeating section S, S' comprises two skewers 22 in one section plane SP, SP', respectively. Furthermore, here the two skewers 22 of one repeating section S, S' are mirrored with respect to the common longitudinal axis L. Other embodiments are thinkable, but add to complexity.

The skewers 22 in an embodiment extend out of, or away from, its section plane SP, SP', in particular in both directions. The skewers 22 thus extend sideways from the section plane. The skewers 22 as explained above have a skewer support end 26 which in the depicted embodiment connects to the further handling support 1 via rounded part 23. The skewers 22 are at their outer surface away from the common longitudinal axis L supported by a material bridge 27. This material bridge 27 or material support bridge 27 is mainly in the section plane SP (or SP'). It functions in fact as a buttress. The material support bridge 27 starts near the skewer end 25, runs along the outer surface and connects to the further handling support 1. Its width increases from the skewer end 25 to the skewer support end 26.

To provide attachment to the sideways extending skewer 22, a repeating section S, S' further comprises opposite section walls 28 that extend cross with respect to a respective section plane SP, SP'. In an embodiment, the material support bridges 27 connect to, or continue into, edges of the section wall 28 as indicated.

The handling support 1 depicted in figures 8-12 comprises in this embodiment a central stem coinciding with the common longitudinal axis L. The section walls 28 extend from the central stem. In an embodiment, the section walls 28 extend cross with respect to a section plane SP, SP'. The side walls 28 of a repeating section S, S' in the current embodiment continues to a higher section S', S, respectively, and there it reinforces or supports the skewer 22 of that higher section S', S. In particular figure 10 shows that. The thickness of the section wall 28 can be varied as well as the amount of extension away from the longitudinal axis L. In figure 10 it is thicker than the material support bridge 27, but it may have the same width. Furthermore, in this embodiment, the section walls 28 extend to have the same width as the skewers 22, as figure 12 shows.

In the current embodiment, the skewers 22 have their outer surface provided with barbs 29.

The width of the section walls 28 and their thickness may decrease when going from the eye 6 to the tip. In fact, the width, i.e., how far it extends from the common longitudinal axis L may decrease 20% or more. For instance, width can start between 25 and 15 mm, and decrease to between 20 and 10 mm.

Furthermore, the thickness may decrease between 20% and even 50%. For instance, a thickness can start between 6 and 9 mm, and decrease to between 3 and 5 mm.

A repeating section may for instance be between 15 and 25 cm long. In an embodiment, a repeating section S, S' can be between 17 and 22 cm.

In an embodiment, the skewers 22 are between 45 and 55 mm long. In an embodiment, the tip of a skewer 22 is between 20 and 25 mm away from the common longitudinal axis L (perpendicular). An example of a handling support 1 having 10 repeating sections S, S' can be designed to weigh between 130 and 200 gr. Such a handling support can have 20 skewers 22 and carry more than 100 kg of meat. In view of this amount of meat, the handling supports can be disposable, used once, and then be recycled. To that end, a deposit arrangement may be used.

A length of a handling support can measure between about 1 meter and 1.2 meters.

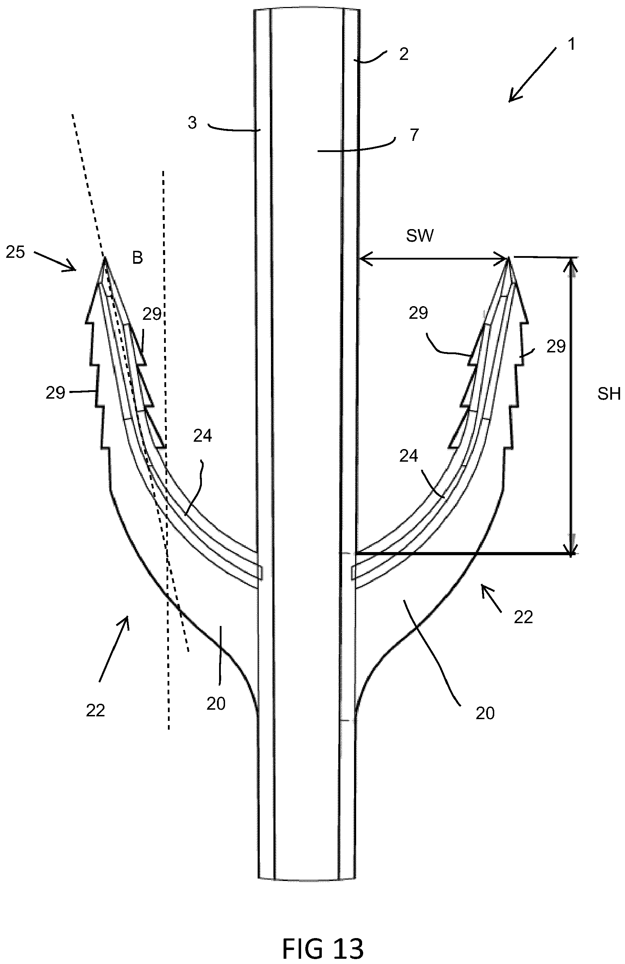

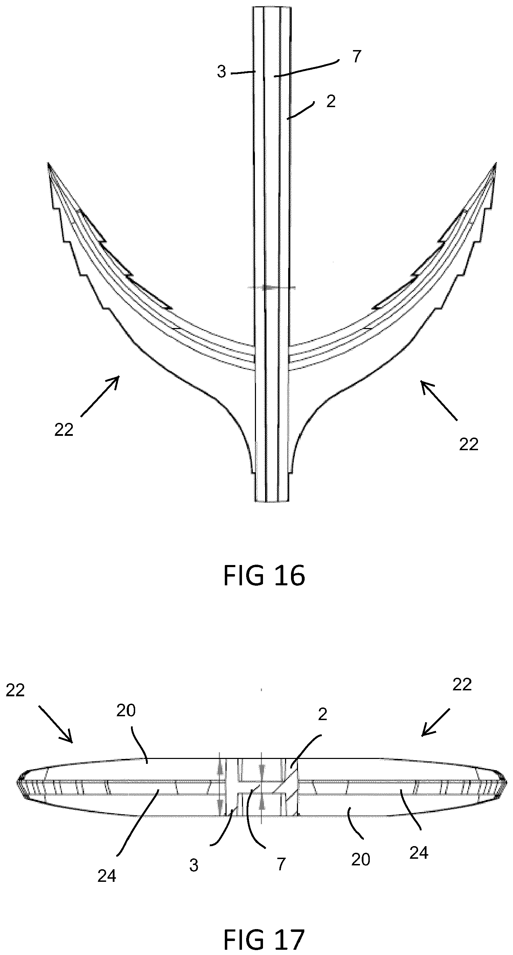

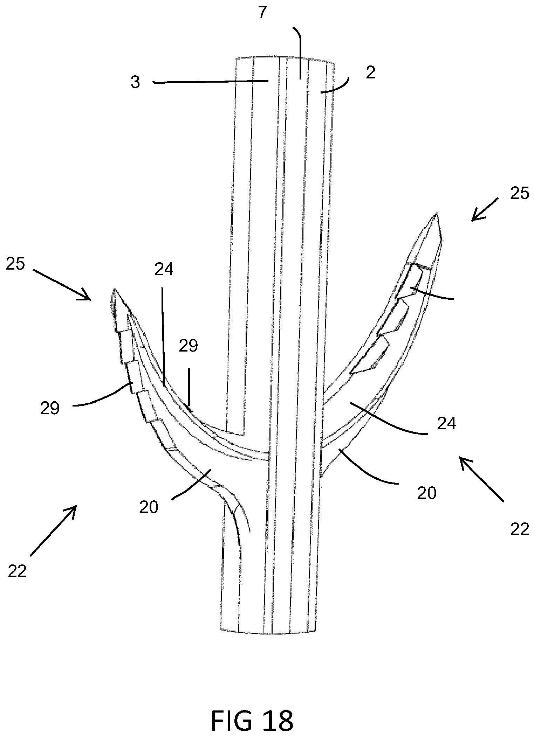

In figures 13-19C, various embodiments of a handling support are depicted. The features of earlier discussed embodiment can be combined with these embodiments.

In the illustrated embodiments of figures 13-19C, the skewers of the handling support are in one plane. As mentioned earlier, this will make a mould easier to produce.

In the illustrated embodiments of figures 13-19C, the actual differences between these embodiments in fact are relative dimensions and other features that allow the handling supports to carry different sizes of meat portions.

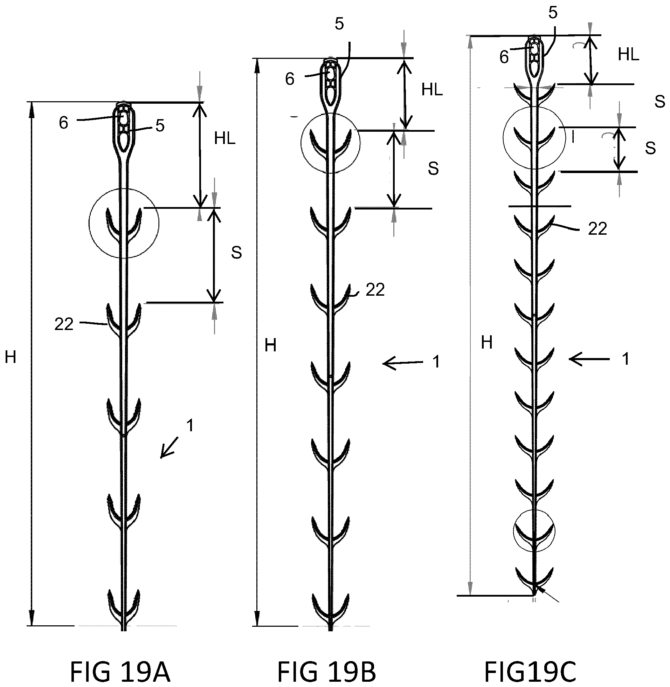

Figures 19A-19C in fact shows an overview of the in fact three different embodiments. In the three embodiments, the actual interspacing of the skewers (measured from tip to tip) goes from 200 to 170 to 110 mm. This defines the interspacing between meat portions on the skewers. In these embodiments, in fact the actual length of the handling supports goes from 1100 mm to 1250 mm to 1400 mm. In fact, when pieces or parts of meat are attached, the overall length of handling support 1 and meat parts will almost be equal. Furthermore, the weight of the handling supports 1 including meat will be comparable.

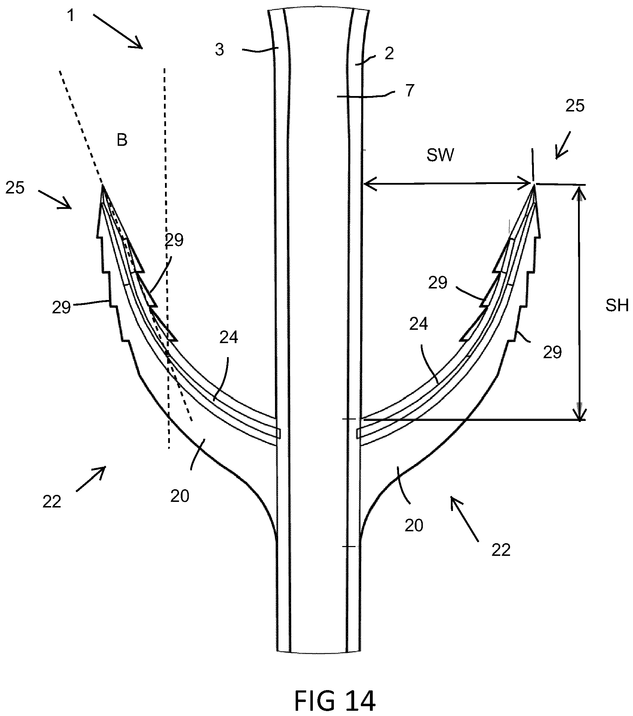

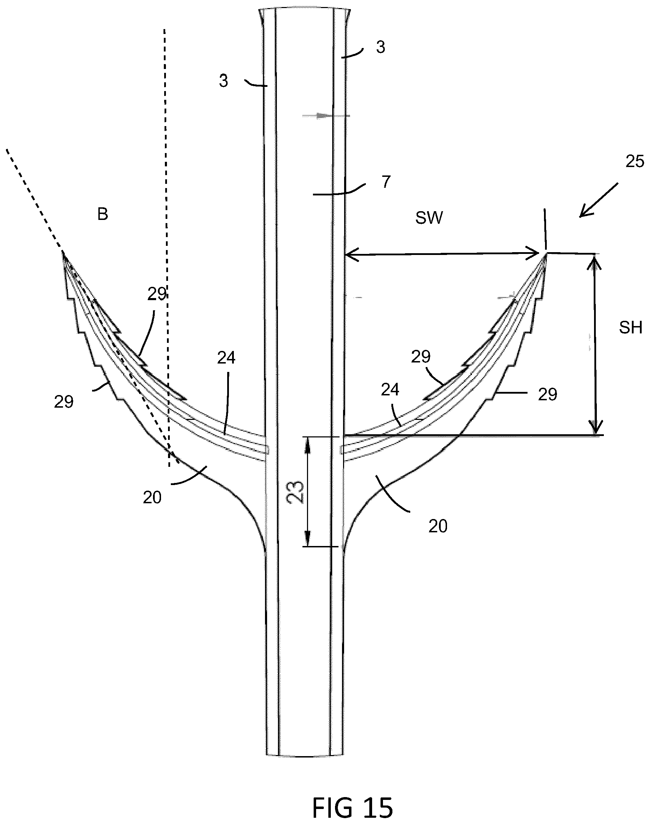

Furthermore, the dimensions of the skewers are different. In the specific embodiments, these dimensions are per section length:
Figure 13 and figure 19A, third section length:
   Section length S = 20 cm,
   Skewer width SW = 2.5 cm,
   Skewer height SH = 5.0 cm,
   Reinforcement rib height = 2.8 cm,
   Skewer end angle B = 12 degrees,
   Head/eye section length HS = 22.3 cm
   Support length H = 110 cm
Figure 14 and figure 19B, second section length:
   Section length S = 17 cm,
   Skewer width SW = 3.5 cm,
   Skewer height SH = 4.8 cm,
   Reinforcement rib height = 2,6 cm,
   Skewer end angle B = 20 degrees
   Head/eye section length HS = 15,9 cm
   Support length H = 125 cm
Figure 15 and figure 19C first section length:
   Section length S = 11 cm,
   Skewer width SW = 4.2 cm,
   Skewer height SH = 3.8 cm,
   Reinforcement rib height = 2,3 cm,
   Skewer end angle B = 30 degrees
   Head/eye section length HS = 22.3 cm
   Support length H = 140 cm

It was found that each of these dimensions can be allowed to vary around 15%. Furthermore, it was found that in order to prevent meat portions or parts to get detached from the skewers, not only the outer part of each skewer is provided with outer barbs, but also the inner part (i.e., facing the uprights 2, 3) is provided with inner barbs.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

### Reference numbers

1 handling support
2, 3 uprights
4 attachment member
5 attachment head
6 eye
7 upright connection/ central part
9 outer hoop
10 lower hoop
11 perpendicular ribs 17 end arch
20 reinforcement rib
22 skewer
23 rounded part
24 skewer ribs
25 skewer pointed end
26 skewer support end
27 material bridge
28 section wall
29 barbs
L common longitudinal axis
S, S' repeating section
SP section plane of repeating section S
SP' section plane of repeating section S
SH Skewer height
SW skewer width
H Handling support length
HL head section/eye section length
α angle between section planes of subsequent repeating sections
B angle between skewer end and longitudinal axis L

The following embodiments are included.
A. Handling support for conveying material parts, in particular meat portions, and comprising repeating sections each comprising at least one skewer in one respective section plane, said repeating sections having a common longitudinal axis, wherein said handling support is made as one part from plastic, wherein said skewers comprise an end extending for allowing skewing said material parts onto said handling support, wherein each repeating section has its section plane rotated at least 45 degrees with respect to a neighbouring section.
B. Handling support for conveying objects according to embodiment A, characterized in that it comprises an uppermost section which at one end comprises an eye for attaching to an automatic conveying member.
C. Handling support for conveying objects according to embodiments A-B, characterized in that said skewers extend in a direction of said eye, in particular slanted with respect to said common longitudinal axis, in particular slanted between 0° and 15°, more in particular between 2° and 11°.
D. Handling support for conveying objects according to embodiments A-C, characterized in that the ends of the skewers comprise a pointed end and a support end, said support end attached to its section at a distance from said common longitudinal axis, in particular via a rounded part, said rounded part integrated into a material bridge in said section plane providing a reinforcement for said skewer.
E. Handling support for conveying objects according to embodiment A, characterized in that the skewers extend functionally parallel to said common longitudinal axis.
F. Handling support for conveying objects according to any one of the preceding embodiments, characterized in that said repeating sections share a common upright or stem coinciding with said common longitudinal axis, in particular said upright or stem having a cross-shaped cross section.
G. Handling support for conveying objects according to any one of the preceding embodiments, characterized in that said handling support comprises said skewers staggered.
H. Handing support of any one of the preceding embodiments, wherein each repeated section has its section plane cross with respect to its neighbouring sections, in particular are the section planes of a subsequent section functionally 90 degrees rotated with respect to one another.
I. Handing support of any one of the preceding embodiments, wherein each repeated section comprises two skewers, in particular opposite one another with respect to said common longitudinal axis, more in particular at a lower end of a repeated section.

## Claims

1. Handling support (1) for conveying material parts, in particular meat portions, and comprising repeating sections (S, S') each comprising two skewers (22) in substantially one section plane, said repeating sections having a common longitudinal axis (L) and opposite sides with respect to said longitudinal axis (L) with one skewer at one side and the other skewer at said opposite side, wherein said handling support (1) is made as one part from plastic, wherein said skewers (22) comprise a skewer end (25) extending away from said longitudinal axis (L) for allowing skewing said material parts onto said handling support (1), a skewer base and a skewer tip sharp enough for allowing meat portions to be punctured, wherein said sections comprise at least one from:
- a first section type with a first section length of 10-12 cm and said skewers having a skewer length of 3.0-4.5 cm and a skewer width of 4.0-5.0 cm;
- a second section type with a second section length of 15-18 cm and said skewers having a skewer length of 4.5-5.5 cm and a skewer width of 3.0-4.0 cm;
- a third section type with a third section length of 19-25 cm, and wherein said skewers having a skewer length of 4.0-6.0 cm and a skewer width of 2.0-3.0 cm.

2. Handling support (1) according to Claim 1, **characterized in that** it comprises an uppermost head section which at one end comprises an eye (6) for attaching to a conveying member, in particular wherein when said head section is attached to a section of said first section type it has a head section length of 10-13 cm, when said head section is attached to a section of said second section type it has a head section length of 14-17 cm, or when said head section is attached to a section of said third section type it has a head section length of 20-24 cm,.

3. Handling support (1) according to claim 1 or 2, wherein said handling support (1) has identical repeating sections (S, S'), in particular 4-6 of said repeating sections (S, S').

4. Handling support (1) according to any one of the preceding claims, wherein each section comprises said two skewers opposite one another, in particular said two skewers are plane mirrored in a plane in said longitudinal axis.

5. Handling support (1) according to any one of the preceding claims, **characterized in that** said handling support (1) has 4-6 sections of said third section length, 6-8 sections of said second section length, or 10-15 sections of said first section length, in particular said handling support (1) has a handling support length of 100-150 cm.

6. Handling support (1) according to any one of the preceding claims, **characterized in that** said sections have a first section length of 10-12 cm, a second section length of 16-18 cm or a third section length of 19-22 cm, wherein
- for a section with said first section length, the skewers of said section have a skewer length of 3.0-4.0 cm and have said skewer tip 4.0-4,5 cm from said side of said handling support,
- for a section with said second section length, the skewers have a skewer length of 4.5-5.2 cm and have a skewer tip 3.0-4.0 cm from said side of said handling support,
- for a section with said third section length, the skewers have a skewer length of 4.5-6.0 cm and have a skewer tip 2.0-2.8 cm from said side of said handling support.

7. Handling support for conveying objects according to any one of the preceding claims, **characterized in that** the ends of the skewers comprise a pointed end and a support end, said support end attached to its section at a distance from said common longitudinal axis, in particular via a rounded part, said rounded part integrated into a material bridge in said section plane providing a reinforcement for said skewer.

8. Handling support for conveying objects according to any one of the preceding claims, **characterized in that** the skewer ends extend at angle with respect to said common longitudinal axis of 18-21 degrees for said third section length, 22-27 degrees for said second section length and 30-40 degrees for said first section length.

9. Handling support according to any one of the preceding claims, **characterized in that** said repeating sections share a common upright or stem coinciding with said common longitudinal axis, in particular said upright or stem having a cross-shaped cross section.

10. Handing support of any one of the preceding claims, wherein each repeated section comprises two skewers, in particular opposite one another with respect to said common longitudinal axis, more in particular at a lower end of a repeated section.

11. Handling support according to any one of the preceding claims, **characterized in that** a skewer comprises barbs on an skewer inner side and barbs on a skewer outer side.
